# EUROPÄISCHE PATENTSCHRIFT

(11) **EP 2 432 828 B1**
(45) Veröffentlichungstag und Bekanntmachung des Hinweises auf die Patenterteilung: **11.12.2019**
(21) Anmeldenummer: 10719354.2
(22) Anmeldetag: 17.05.2010
(51) Int. Cl.: C08L 1/28, C09J 101/28, C08K 3/24, C08K 3/26, C09J 11/04, C09J 11/08, C09J 133/08, C08J 3/03

(54) **STABILISIERTES FLÜSSIGES KLEBSTOFFKONZENTRAT**
STABILIZED LIQUID ADHESIVE CONCENTRATE
CONCENTRÉ LIQUIDE STABILISÉ DE MATIÈRE ADHÉSIVE

(30) Priorität: 18.05.2009 DE 102009003190; 07.08.2009 DE 102009028347
(43) Veröffentlichungstag der Anmeldung: 28.03.2012
(73) Patentinhaber: Henkel AG & Co. KGaA, 40589 Düsseldorf (DE)
(72) Erfinder: HOFFMANN, Heinz-Peter, 40789 Monheim (DE); NEITZER, Klaus, 40595 Düsseldorf (DE)
(86) Internationale Anmeldenummer: PCT/EP2010/056728
(87) Internationale Veröffentlichungsnummer: WO 2010/139548

(56) Entgegenhaltungen:
- EP-A1- 1 010 807
- EP-A2- 0 003 582
- EP-A2- 0 413 274
- EP-A2- 0 894 834
- EP-A2- 1 054 020
- EP-A2- 1 568 740
- WO-A1-2006/085840
- US-A- 2 829 114
- US-A- 3 004 009
- US-A- 3 068 211
- US-A- 3 334 077
- US-A- 4 184 888
- US-A- 5 331 050
- US-A- 6 150 313
- US-A1- 2002 121 224
- US-A1- 2004 067 865
- US-B1- 6 171 702
- US-B1- 6 406 537
- Wbparts: "6850-00-249-8021 - WETTING AGENT | WBParts", , 3 January 2017 (2017-01-03), XP055331856, Retrieved from the Internet: URL:https://www.wbparts.com/rfq/6850-00-24 9-8021.html [retrieved on 2017-01-03]
- So ET AL: "Product NACCONOL SERIES Name Chemical Structure", , 1 February 2013 (2013-02-01), XP055331862, Retrieved from the Internet: URL:http://www.stepan.com/pdfs/Bulletins/N ACCONOLGSERIES.pdf [retrieved on 2017-01-03]

## Beschreibung

Die vorliegende Erfindung liegt auf dem Gebiet der flüssigen Klebstoffkonzentrate, wie sie zum Beispiel als Grundlage für Tapetenkleister Verwendung finden. Insbesondere betrifft die Erfindung ein mit Salz stabilisiertes flüssiges Klebstoffkonzentrat, ein Verfahren zu seiner Herstellung und seine Verwendung.

Klebstoffe zum Anbringen von Tapeten an der Wand basieren bislang häufig auf Feststoffzusammensetzungen aus flocken- oder pulverförmigen Polysacchariden. Diese Produkte werden, meistens in Abmischung mit weiteren Zusätzen, als Pulvergemisch vertrieben, das beim Mischen mit Wasser den fertigen Klebstoff ergibt. Das Vermischen mit Wasser erfolgt am Ort der Anwendung des Klebstoffs durch den Verbraucher. Die pulverförmigen Polysaccharidzubereitungen konfrontieren den Anwender jedoch mit einer Reihe von Nachteilen.

So ist in der Regel die Verwendung einer gesamten Packungsgröße des pulverförmigen Produkts erforderlich, um Unregelmäßigkeiten der Zusammensetzung durch Pulverabscheidung in der Verpackung zu vermeiden. Zudem bilden sich häufig Klumpen von nicht aufgelöstem Pulver, und die hergestellte Paste muss für einige Zeit stehen gelassen werden, um eine vollständige Auflösung der Zusammensetzung zu bewirken. Häufig ist die Auflösung von Klumpen auch nur durch eine erhebliche körperliche Anstrengung beim Umrühren der Lösung zu erreichen, die unter Umständen über mehrere Minuten durchgehalten werden muss. Verbleiben trotzdem Klumpen in der fertigen Lösung, rufen diese insbesondere bei dünnen Wandbelägen eine unregelmäßige Oberfläche nach der Verklebung auf der Wand hervor. Darüber hinaus sind die pulverförmigen Polysaccharidzubereitungen oft sehr fein vermahlen und weisen einen hohen Feinstaubanteil auf, so dass beim Ein- und Umfüllen der Zusammensetzungen eine für den Anwender unangenehme Staubentwicklung auftritt.

Es wurde versucht, durch flüssige Klebstoffkonzentrate, in denen bereits dispergierte Polysaccharide vorliegen, die Probleme der pulverförmigen Tapetenkleister zu vermeiden. So wurden Klebstoffkonzentrate vorgeschlagen, die dispergierte Methylcellulose oder Stärke in einem geeigneten Lösungsmittel enthalten. Die Stabilität derartiger Zusammensetzungen ist im Allgemeinen jedoch gering, und es tritt leicht eine Phasentrennung in Flüssig- und Feststoffphasen auf. Zudem ist es schwierig, derartige Zusammensetzungen durch Schütteln zu redispergieren. Auch die Kontrolle der Viskosität und der Gießbarkeit ist schwierig.

In der GB-A-2310861 ist ein flüssiges Klebstoffkonzentrat beschrieben, das ein wasserlösliches Polymer in einem wassermischbaren oder emulgierbaren, im Wesentlichen nicht wässrigen Lösungsmittel enthält. Beispielsweise wurde Methylhydroxyethylcellulose in Isopropanol eingebracht. Die erzielten Formulierungen sind jedoch nicht lagerstabil und separieren in eine feste und eine flüssige Phase. Das Material kann dann nicht mehr durch einfaches Schütteln redispergiert werden.

In der EP 0 839 888 B1 ist ein flüssiges Klebstoffkonzentrat beschrieben, das in einem wassermischbaren oder-emulgierbaren, im Wesentlichen nicht wässrigen Lösungsmittel ein dispergiertes wasserlösliches Polymer und darüber hinaus einen Viskositätsveränderer auf Silikatbasis sowie ein oberflächenaktives Mittel enthält. Auch diese Formulierungen genügen erhöhten Anforderungen an die Lagerstabilität nur unzureichend und weisen zudem eine hohe Viskosität auf.

Die WO 2007/096123 beschreibt ein flüssiges Klebstoffkonzentrat, das Carboxymethylcellulose, Stärke oder Stärkederivate bzw. Mischungen davon in einem wassermisch- oder emulgierbaren, organischen Lösungsmittel enthält und mit Schichtsilikaten sowie einer Ca-Verbindung stabilisiert ist. Die Klebkraft, speziell die Nassklebkraft dieses Systems ist nicht hinreichend ausgeprägt.

Der Ansatz, eine konzentrierte Suspension von Polysaccharidteilchen in einer wässrigen Lösung zur Herstellung von für Verklebungen einsetzbaren Lösungen zu verwenden, wird beispielsweise in der WO 96/18676 A1 thematisiert. In dieser Schrift wird ein Verfahren zur Herstellung einer wässrigen Dispersion eines nichtionischen Celluloseethers, der keinen Trübungspunkt in Wasser hat, beschrieben. Dabei wird von einer trockenen Mischung ausgegangen, die einen mit Glyoxal vernetzten Celluloseether und ein Elektrolytsalz enthält; nach dem Einbringen in Wasser soll die Konzentration des Celluloseethers 8-25 Gew.-% betragen, während der Salzanteil 20-45 Gew.-% der Dispersion beträgt.

Die EP 0 482 533 B1 beschreibt eine fluidisierte Suspension eines nichtionischen Polymers in einer wässrigen Lösung, wobei die Suspension mindestens 28 Gew.-% Natriumformiat umfasst.

In der US 4,883,537 ist eine wässrige Dispersion einer wasserlöslichen Carboxymethylcellulose beschrieben, die in einer Lösung von 33 Gew.-% - bezogen auf die Gesamtmenge an Wasser und Salz - Kaliumcarbonat vorliegt.

Die US 4,883,536 beschreibt wässrige Dispersionen wasserlöslicher anionischer oder nichtionischer Polymere; diese sind in einer wässrigen Lösung eines Ammoniumsalzes mit multivalentem Anion dispergiert, wobei die Gewichtsrelation des Ammoniumsalzes zu Wasser mindestens 0,15 beträgt.

In der EP 0 698 647 B1 sind Dispersionen von Methylcellulosen beschrieben, die mit anorganischen Salzen mit einem Gewichtsanteil von 15 - 45% stabilisiert werden. Ferner können die Dispersionen Vinyl-Latices, z. B. auf Basis von Polyvinylacetat, enthalten.

Grundsätzlich müssen die Polysaccharidteilchen in der Dispersion in einer derartigen Konzentration vorliegen, dass eine hohe Verdünnung mit Wasser durch den Anwender immer noch zu Klebstoffen mit ausreichender Klebefestigkeit führt.

Da Polysaccharide sich jedoch in Wasser lösen oder zumindest darin aufquellen, sind derartig hohe Polysaccharidkonzentrationen in Wasser üblicherweise nicht oder nur schwer zu handhaben, da sie zu gallertartigen Feststoffen führen, deren schnelle Verteilung in Wasser bei der Verdünnung nicht gewährleistet ist.

Durch das Dispergieren entsprechender Polysaccharide in einer wässrigen Salzlösung wird versucht, diesem Problem zu begegnen. Aufgrund des hohen Salzgehalts solcher Lösungen quellen die Polysaccharide nicht oder nur in geringem Maße an, so dass eine derartige Dispersion eine nur geringe Viskosität aufweist und damit handhabbar, insbesondere gießfähig, bleibt. Die dispergierten Polysaccharidteilchen verteilen sich nach Eintrag der Dispersion in eine größere Wassermenge häufig schneller und besser als pulverförmige Feststoffteilchen, so dass eine klumpenfreie Lösung entstehen kann. Zudem ist das Lösungsverhalten von dispergierten Poylsaccharidteilchen häufig besser als das von Feststoffteilchen, so dass schneller eine gebrauchsfertige Lösung entsteht.

Die im Stand der Technik beschriebenen Polysacchariddispersionen in wässrigen Salzlösungen ergeben allerdings nach Verdünnung durch den Anwender vielfach Lösungen, die eine verminderte Klebkraft aufweisen. Darüber hinaus kann es zu Kristallisationserscheinungen kommen, die beispielsweise zu unerwünscht glänzenden Oberflächen oder zu unregelmäßigen Oberflächenstrukturen führen. Ferner kommt es leichter zur Anschmutzung von mit derartigen Lösungen verklebten Wandbelägen.

Aufgabe der vorliegenden Erfindung ist es daher, ein Klebstoffkonzentrat zur Verfügung zu stellen, das lagerstabil ist, einfach anzurühren und zu applizieren ist und nach Verdünnung mit Wasser einen Flüssigklebstoff bzw. Kleister mit hoher Klebkraft ergibt, wobei die vorstehend aufgeführten Nachteile vermieden werden sollen. Insbesondere soll das Konzentrat eine gute Gießfähigkeit und Handhabbarkeit aufweisen und darüber hinaus bei der Lagerung nicht eindicken. Zudem ist es wünschenswert, dass das Konzentrat einen annähernd neutralen pH-Wert aufweist, wobei darunter ein pH-Wert im Bereich von 4 bis 10 zu verstehen ist.

Die erfindungsgemäße Lösung der Aufgabe ergibt sich aus dem Grundgedanken der Erfindung, das flüssige Klebstoffkonzentrat auf der Basis einer wässrigen Lösung mindestens eines Alkalimetallsalzes einer zwei- bis vierwertigen anorganischen Sauerstoffsäure zu formulieren und mindestens ein Copolymer einzusetzen.

Gegenstand der Erfindung ist daher ein flüssiges Klebstoffkonzentrat, das Wasser, mindestens ein nichtionisches Polysaccharid, mindestens ein Copolymer und Natriumsulfat enthält.

Unter einem "flüssigen Klebstoffkonzentrat" wird im Rahmen der vorliegenden Erfindung eine Dispersion oder Lösung verstanden, die gegebenenfalls selbst bereits als Klebstoff verwendet werden kann, aus der jedoch in der Regel durch Verdünnen mit einem Dispersions- oder Lösungsmittel, bei dem es sich vorzugsweise um Wasser handelt, ein gebrauchsfertiger Klebstoff erhalten wird. Der Begriff "Klebstoff" wird hier in einem weiten Sinne verstanden und schließt insbesondere Tapetenkleister, Farbkonzentrate und Farbzubereitungen mit ein.

Ein erfindungsgemäßes flüssiges Klebstoffkonzentrat zeichnet sich naturgemäß gegenüber herkömmlichen Pulverklebern bzw. pulverförmigen Tapetenkleistern dadurch aus, dass keine Staubbildung beim Anrühren auftritt, dass eine Teilmengenentnahme möglich ist und dass keine Klumpenbildung und daraus folgend auch keine Reduzierung der Klebkraft durch nicht aufgeschlossenes Material auftritt. Darüber hinaus weist ein erfindungsgemäßes Klebstoffkonzentrat eine hohe Lagerstabilität auf, die sich insbesondere darin äußert, dass das Eindicken und die damit verbundene Viskositätserhöhung während der Lagerung gegenüber bekannten flüssigen Klebstoffkonzentraten deutlich eingeschränkt sind. Zudem ist die Viskosität eines erfindungsgemäßen Klebstoffkonzentrats so ausgeprägt, dass eine gute Fließfähigkeit gewährleistet ist. Das Konzentrat lässt sich daher einfach applizieren und anrühren.

Unter einem "nichtionischen Polysaccharid" wird ein makromolekulares, gegebenenfalls derivatisiertes Kohlenhydrat verstanden, dessen Moleküle aus mehr als zehn - gewöhnlich jedoch erheblich mehr - glycosidisch miteinander verknüpften Monosaccharid-Molekülen bestehen und das im neutralen pH-Bereich keine lonenladung trägt.

Als nichtionische Polysaccharide eignen sich im Rahmen der vorliegenden Erfindung grundsätzlich alle nichtionischen Polysaccharide, deren Löslichkeit oder Quellverhalten durch den erfindungsgemäß vorgesehenen Salzgehalt des Klebstoffkonzentrats so beeinflusst wird, dass diese Eigenschaft nicht zu einem für den Anwender nicht mehr handhabbaren Produkt führt. Bevorzugt enthält ein erfindungsgemäßes Klebstoffkonzentrat daher nur solche Polysaccharide, deren Wasserlöslichkeit sich durch Zugabe von Salz im Wesentlichen vollständig, d. h. auf einen Wert von weniger als 10 Gew.-%, vorzugsweise weniger als 5 Gew.-%, insbesondere weniger als 4, 3, 2 oder 1 Gew.-% reduzieren lässt, jeweils bezogen auf die Masse des eingesetzten Polysaccharids.

Als nichtionische(s) Polysaccharid(e) enthält ein erfindungsgemäßes Klebstoffkonzentrat bevorzugt Cellulose und/oder deren Derivate, vorzugsweise Celluloseether. Celluloseether werden in der Regel durch partielle oder vollständige Substitution von Wasserstoffatomen der Hydroxylgruppen der Cellulose durch Alkyl- und/oder (Ar)Alkylgruppen hergestellt. Die Alkyl- und/oder (Ar)Alkylgruppen tragen gegebenenfalls zusätzliche nichtionische Gruppen. Die einzelnen Cellulosemoleküle sind in der Regel unterschiedlich substituiert, so dass der Substitutionsgrad ein Mittelwert ist. Außerdem kann eine entsprechende Substitution auch an während einer Substitutionsreaktion gegebenenfalls entstehenden "neuen" Hydroxylgruppen einsetzen, wie dies beispielsweise bei der Veretherung durch Epoxyverbindungen der Fall ist.

Eine Veretherung von Cellulose wird im Allgemeinen durch Einwirkung von (Ar)Alkylhalogeniden, beispielsweise Methyl-, Ethyl- und/oder Benzylchlorid und/oder 2-Chlorethyldiethylamin, oder Epoxiden, beispielsweise Ethylen-, Propylen- und/oder Butylenoxid, aktivierten Olefinen, beispielsweise Acrylnitril oder Acrylamid, auf mit Basen, meist mit wäßriger Natronlauge, aktivierte Cellulose durchgeführt.

Weitere im Rahmen der vorliegenden Erfindung geeignete Polysaccharide sind Guar und dessen Derivate, insbesondere Hydroxypropylguar. Im Rahmen einer speziellen Ausführungsform der vorliegenden Erfindung werden retardierte Polysaccharidderivate eingesetzt, d.h. solche Polysaccharidderivate, die einer vernetzenden Oberflächenbehandlung, beispielsweise mit Glyoxal oder Polyglyoxal, unterzogen wurden. Entsprechende Verfahren zur Herstellung retardierter Polysaccharidderivate sind dem Fachmann bekannt.

Bevorzugt ist im erfindungsgemäßen Klebstoffkonzentrat als nichtionisches Polysaccharid mindestens eine Hydroxyalkylcellulose und/oder mindestens ein Derivat davon enthalten. Besonders geeignete Vertreter sind Hydroxyethylcellulose, Hydroxypropylcellulose, hydrophob modifizierte Hydroxyethylcellulose wie z. B. C₆-C₂₄-Alkylgruppen-enthaltende Hydroxyethylcellulosepolymere, Hydroxyethylhydroxypropylcellulose, Methylhydroxypropylcellulose, Methylhydroxyethylcellulose und eine 3-Alkoxy-2-hydroxypropylhydroxyethylcellulose, worin die Alkylgruppe etwa 6-24 Kohlenstoffatome enthält. Ganz besonders bevorzugt sind Hydroxyethylcellulose, Hydroxypropylcellulose, Methylhydroxypropylcellulose und Methylhydroxyethylcellulose, insbesondere Methylhydroxyethylcellulose.

Das erfindungsgemäße flüssige Klebstoffkonzentrat kann die oben genannten Polysaccharide jeweils alleine enthalten. Es ist jedoch ebenso möglich und im Rahmen der vorliegenden Erfindung vorgesehen, dass ein erfindungsgemäßes Klebstoffkonzentrat ein Gemisch aus zwei oder mehr der oben genannten Polysaccharide, beispielsweise 3, 4, 5, 6, 7, 8, 9 oder 10 oder mehr unterschiedliche Polysaccharide, enthält.

Bevorzugt weisen 36 bis 68 % der Partikel der erfindungsgemäß eingesetzten nichtionischen Polysaccharide eine minimale Partikelgröße von 0,125 mm auf. Ferner weisen vorzugsweise 1 bis 8 % der Partikel der erfindungsgemäß eingesetzten nichtionischen Polysaccharide eine minimale Partikelgröße von 0,2 mm auf. Unter "Partikeln" werden vorliegend die makroskopischen Teilchen der nichtionischen Polysaccharide verstanden, worunter sowohl Primärteilchen als auch Agglomerate und Aggregate fallen können. Der Begriff "Partikel" wird synonym zu dem dem Fachmann ebenfalls bekannten Begriff "Korn" verstanden. Unter der "Partikelgröße" wird die maximale Ausdehnung eines Partikels verstanden. Bei annähernd kugelförmigen Teilchen wird deren Durchmesser verwendet. Bei unregelmäßig geformten Körpern wird von deren Volumen ausgegangen und der Durchmesser der volumengleichen Kugel angegeben (Äquivalentdurchmesser). Soweit es sich bei den Partikeln um Fasern handelt, wird die maximale Partikelgröße mit der Faserlänge gleichgesetzt. Generell lässt sich im Kontext der vorliegenden Erfindung die maximale Partikelgröße der Polysaccharidpartikel durch Siebanalyse, beispielsweise mit dem Alpine-Luftstrahlsieb ermitteln. Die Angabe einer minimalen Partikelgröße von beispielsweise 0,2 mm bedeutet, dass bei einer Maschenweite des Siebs von 0,2 mm der angegebene prozentuale Anteil an Partikeln (Teilchen) als Rückstand auf dem Sieb festzustellen ist. Die angegebenen prozentualen Anteile werden als mengenmäßiger Anteil an der Gesamtanzahl der Partikel verstanden.

Die verwendeten Polysaccharide bzw. Polysaccharidderivate liegen im Rahmen der vorliegenden Erfindung mit einem Wassergehalt von etwa 5 bis 20 Gew.-% vor, vorzugsweise jedoch mit einem Wassergehalt von weniger als 10 Gew.-%.

Der Anteil an nichtionischen Polysacchariden und/oder Polysaccharidderivaten wird vorzugsweise so gewählt, dass eine zehnfache Verdünnung des erfindungsgemäßen Klebstoffkonzentrats mit Wasser eine Zusammensetzung ergibt, die ausreichend gute Klebeeigenschaften aufweist. Der Anteil an Polysacchariden und/oder Polysaccharidderivaten beträgt im erfindungsgemäßen flüssigen Klebstoffkonzentrat 2 bis 70 Gew.-%, vorzugsweise 5 bis 30 Gew.-%, beispielsweise 10 bis 25 Gew.-% und besonders bevorzugt 15 bis 22 Gew.-%, jeweils bezogen auf die Gesamtmasse des Klebstoffkonzentrats und ausgehend von den Polysacchariden in der eingesetzten Form, d. h. inklusive des Wassergehaltes von 5 bis 20 Gew.-%.

Neben den oben genannten Polysacchariden und/oder Polysaccharidderivaten enthält ein erfindungsgemäßes Klebstoffkonzentrat Wasser. Grundsätzlich eignet sich zur Herstellung des erfindungsgemäßen Klebstoffkonzentrats jede Art von Wasser, welches nicht zu einem im Vergleich zu destilliertem Wasser zusätzlichen Viskositätsaufbau im Klebstoffkonzentrat führt. Geeignet sind beispielsweise destilliertes Wasser, vollentsalztes Wasser (VE-Wasser), Regenwasser, Brauchwasser, Wasser, wie es beispielsweise aus chemischen Reaktionen gewonnen wird, sofern keine für den Anwender direkt gesundheitsschädlichen Stoffe darin enthaltend sind, Quellwasser oder Leitungswasser.

Vorzugsweise enthält das erfindungsgemäße flüssige Klebstoffkonzentrat 30 bis 80 Gew.-%, besonders bevorzugt 45 bis 70 Gew.-% und insbesondere 50 bis 65 Gew.-% Wasser, jeweils bezogen auf die Gesamtmasse des Klebstoffkonzentrats.

Unter einem "Copolymer" wird nach allgemeiner Definition ein vollsynthetisches Polymer verstanden, das aus mehr verschiedenartigen Monomeren entstanden ist, als für eine Polymerisation gemäß dem jeweiligen Reaktionsmechanismus erforderlich gewesen wären. Bevorzugt sind die im Rahmen der vorliegenden Erfindung einsetzbaren Copolymere aus zwei verschiedenen Monomeren aufgebaut.

Geeignete Copolymere sind im Rahmen der vorliegenden Erfindung beispielsweise auf Vinylestern basierende Copolymere, insbesondere Copolymere des Vinylacetats mit Ethylen und/oder Vinylchlorid und/oder weiteren Vinylestern wie Vinyllaurat, Versaticsäurevinylestern, Vinylpivalat und/oder Estern von Maleinsäure/Fumarsäure, ferner Copolymerisate von Vinylestern gesättigter C₃-C₈-Alkylcarbonsäuren mit Ethylen, Vinylchlorid und/oder weiteren Vinylestern. Darüber hinaus sind Copolymerisate auf der Basis von Styrol, Acrylsäureestern, Methacrylsäureestern und/oder Vinylchlorid geeignet, z. B. Styrol-Butadien-Copolymerisate, Vinylchlorid-Ethylen-Copolymere oder Styrol-Acrylsäureester-Copolymere (Styrolacrylate). Die aufgeführten Copolymere tragen zur Verstärkung der Klebkraft bei.

Bevorzugt ist im erfindungsgemäßen Klebstoffkonzentrat mindestens ein Copolymer ein Methacrylsäureester-, Acrylsäureester- und/oder Styrolcopolymer. Dies bedeutet, dass zumindest eines der das Copolymer konstituierenden Monomere ein Methacrylsäureester, ein Acrylsäureester oder Styrol ist, wobei das Copolymer neben den genannten noch aus weiteren Monomeren aufgebaut sein kann. Ganz besonders bevorzugt ist mindestens ein Copolymer ein Styrol-Acrylsäureester-Copolymer (Styrolacrylat).

Die Copolymere werden im Rahmen der vorliegenden Erfindung in der Regel als wässrige Dispersion eingesetzt. Der Gewichtsanteil der Copolymere selbst, d. h. des trockenen Copolymers bzw. der trockenen Copolymere an der Gesamtmasse des erfindungsgemäßen Klebstoffkonzentrats beträgt vorzugsweise 1 bis 20 Gew.-%, besonders bevorzugt 3 bis 15 Gew.-%, insbesondere 5 bis 12 Gew.-% und ganz besonders bevorzugt 6 bis 10 Gew.-%.

Vorzugsweise weist das Gewichtsverhältnis der nichtionischen Polysaccharide zur Trockenmasse der Copolymere Werte von 1:1 bis 4:1, besonders bevorzugt von 2:1 bis 3:1, auf. Unter der "Trockenmasse" der Copolymere wird die Masse des reinen, trockenen Copolymers bzw. der reinen, trockenen Copolymere verstanden, insbesondere ist darunter nicht die Masse der üblicherweise eingesetzten wässrigen Dispersion des Copolymers bzw. der Copolymere zu verstehen. Hinsichtlich des Gewichts der Polysaccharide wird von der eingesetzten Form, d. h. inklusive des Wasseranteils, ausgegangen. Mit dem angegebenen Gewichtsverhältnis zwischen Polysacchariden und Copolymeren wird ein besonders ausgewogenes Verhältnis zwischen guter Klebkraft und hoher Lagerstabilität des erfindungsgemäßen Klebstoffkonzentrats erreicht.

Ein weiterer Bestandteil des erfindungsgemäßen flüssigen Klebstoffkonzentrats ist Natriumsulfat. In einer Ausführungsform kann zusätzlich mindestens ein Alkalimetallsalz einer zwei- bis vierwertigen anorganischen Sauerstoffsäure enthalten sein. Die Gruppe der in Frage kommenden Alkalimetalle umfasst dabei Lithium, Natrium, Kalium, Rubidium und Cäsium, wobei unter diesen Lithium, Natrium und Kalium bevorzugt sind. Besonders bevorzugt ist als Alkalimetallsalz einer zwei- bis vierwertigen anorganischen Sauerstoffsäure ein Natriumsalz enthalten.

Unter einer zwei- bis vierwertigen anorganischen Sauerstoffsäure wird grundsätzlich jede anorganische Sauerstoffsäure verstanden, die zwei bis vier dissoziierbare Wasserstoffatome enthält, die durch Metalle oder jeweils durch einen einwertigen organischen Rest ersetzbar sind. Unter einer Sauerstoffsäure wird eine Verbindung verstanden, die Sauerstoff, mindestens ein weiteres Element und zumindest ein dissoziierbares Wasserstoffatom enthält und unter Abgabe eines Protons eine konjugierte Base bilden kann. Insbesondere handelt es sich dabei um anorganische Säuren, die im Anion semipolar bzw. koordinativ gebundenen Sauerstoff enthalten, wie zum Beispiel Salpetersäure (HNO₃), Schwefelsäure (H₂SO₄), Phosphorsäure (H₃PO₄), Kohlensäure (H₂CO₃ bzw. CO₂/H₂O) oder Tetraoxomangan(VI)-säure (H₂MnO₄). Bevorzugt ist im erfindungsgemäßen Klebstoffkonzentrat mindestens ein Alkalimetallsalz einer zweiwertigen anorganischen Sauerstoffsäure enthalten. Besonders bevorzugt ist das Alkalimetallsalz einer zwei- bis vierwertigen anorganischen Sauerstoffsäure ein Alkalimetallsulfat (Anion: SO₄²⁻) und/oder ein Alkalimetallcarbonat (Anion: CO₃²⁻). Sofern im Rahmen des vorliegenden Textes beziehungsweise der vorliegenden Erfindung Salze mehrwertiger, beispielsweise zwei- bis vierwertiger Säuren thematisiert werden, sind darunter vorzugsweise jeweils die durch maximale Salzbildung entsprechend der Wertigkeit erhaltenen Salze zu verstehen. Beispielsweise ist unter dem Salz einer zweiwertigen Säure bevorzugt ein Salz zu verstehen, das im Anion zwei negative Ladungen und nicht nur eine aufweist. Unter dem Alkalimetallsalz der Schwefelsäure ist daher zum Beispiel vorzugsweise das entsprechende Sulfat und nicht das Hydrogensulfat HSO₄²⁻ zu verstehen.

Der Gewichtsanteil des Alkalimetallsalzes bzw. der Alkalimetallsalze einer zwei- bis vierwertigen anorganischen Sauerstoffsäure beträgt bevorzugt 3 bis 18 Gew.-%, besonders bevorzugt 5 bis 15 Gew.-% und insbesondere 6 bis 14 Gew.-%, beispielsweise 7 bis 13 Gew.-%, jeweils bezogen auf die Gesamtmasse des flüssigen Klebstoffkonzentrats und ausgehend vom Gewicht des jeweiligen Salzes ohne Kristallwasser. Innerhalb dieser Bereiche wird ein gut stabilisiertes Konzentrat erhalten, ohne dass die Klebkraft einer daraus hergestellten gebrauchsfertigen Zusammensetzung nachteilig beeinflusst wird.

Im Rahmen einer speziellen Ausführungsform des erfindungsgemäßen flüssigen Klebstoffkonzentrats ist zusätzlich zu mindestens einem Alkalimetallsalz einer zwei- bis vierwertigen anorganischen Sauerstoffsäure mindestens ein Alkalimetallsalz einer zwei- bis vierwertigen Carbonsäure enthalten. Unter einer zwei- bis vierwertigen Carbonsäure wird dabei jede Verbindung verstanden, die zwei bis vier Carboxy-Gruppen (-COOH) enthält. Auch hier umfasst die Gruppe der in Frage kommenden Alkalimetalle Lithium, Natrium, Kalium, Rubidium und Cäsium, wobei unter diesen Lithium, Natrium und Kalium bevorzugt sind, wobei Natrium besonders bevorzugt ist. Die somit vorliegende Kombination mindestens eines Alkalimetallsalzes einer zwei- bis vierwertigen anorganischen Sauerstoffsäure mit mindestens einem Alkalimetallsalz einer zwei- bis vierwertigen Carbonsäure ist besonders gut geeignet, ein erfindungsgemäßes Klebstoffkonzentrat zu stabilisieren, so dass auch nach mehrwöchiger Lagerung nur ein geringfügiges Nachdicken beobachtet wird, das die Gießfähigkeit und damit die Verarbeitbarkeit des Konzentrats nicht nachteilig beeinflusst.

Als zwei- bis vierwertige Carbonsäuren können beispielsweise folgende Verbindungen in Form ihrer Alkalimetallsalze eingesetzt werden: Oxalsäure, Fumarsäure, Äpfelsäure, Weinsäure, Citronensäure, Propandicarbonsäuren, Butandicarbonsäuren, Pentandicarbonsäuren, Hexandicarbonsäuren, Heptandicarbonsäuren, Octandicarbonsäuren und deren höhere, lineare oder verzweigte, gesättigte oder ungesättigte Homologen. Weiterhin geeignet sind Alkalimetallsalze entsprechender Polycarbonsäuren, wie sie beispielsweise durch die oligomerisierende oder polymerisierende Umsetzung von Fettsäuren mit mindestens einer olefinisch ungesättigten Doppelbindung erhältlich sind, beispielsweise Dimerfettsäuren oder Trimerfettsäuren. Ebenfalls geeignet sind Alkalimetallsalze von cycloaliphatischen oder aromatischen Dicarbonsäuren wie Dicyclohexancarbonsäuren, Phthalsäure, Isophthalsäure, Terephthalsäure und dergleichen. Weiterhin geeignet sind aliphatische, cycloaliphatische oder aromatische Tricarbonsäuren wie Trimellithsäure. Bevorzugt enthält ein erfindungsgemäßes Klebstoffkonzentrat zusätzlich zu mindestens einem Alkalimetallsalz einer zwei- bis vierwertigen anorganischen Sauerstoffsäure mindestens ein Alkalimetallsalz einer zwei- oder dreiwertigen Carbonsäure, besonders bevorzugt einer dreiwertigen Carbonsäure. Ganz besonders bevorzugt ist im erfindungsgemäßen flüssigen Klebstoffkonzentrat als Alkalimetallsalz einer zwei- bis vierwertigen Carbonsäure ein Alkalimetallcitrat, beispielsweise Natriumcitrat, enthalten.

Vorzugsweise ist/sind das Alkalimetallsalz bzw. die Alkalimetallsalze zwei- bis vierwertiger Carbonsäuren im erfindungsgemäßen Klebstoffkonzentrat zu einem Anteil von 5 bis 10 Gew.-%, besonders bevorzugt von 6 bis 9 Gew.-%, jeweils bezogen auf das Gesamtgewicht des Klebstoffkonzentrats und ausgehend vom Gewicht des Salzes ohne Kristallwasser, enthalten. Das Gewichtsverhältnis des/der Alkalimetallsalze(s) zwei- bis vierwertiger Carbonsäuren zu dem/den Alkalimetallsalz(en) zwei- bis vierwertiger anorganischer Sauerstoffsäuren weist vorzugsweise Werte von 1:1 bis 3:1, besonders bevorzugt von 1,4:1 bis 2:1, beispielsweise von 1,6:1 bis 1,8:1, auf. Diese Werte beziehen sich auf das Gewicht der jeweiligen Salze ohne Kristallwasser.

Vorzugsweise sind die Alkalimetallionen des Alkalimetallsalzes einer zwei- bis vierwertigen anorganischen Sauerstoffsäure und des Alkalimetallsalzes einer zwei- bis vierwertigen Carbonsäure Natriumionen. Ganz besonders bevorzugt ist im erfindungsgemäßen Klebstoffkonzentrat eine Kombination von Natriumsulfat und Natriumcitrat, insbesondere im Gewichtsverhältnis von 1,5:1 bis 1:3 und ganz besonders bevorzugt von 1:1,6 bis 1:1,8, enthalten.

Der Gesamtgehalt an Alkalimetallsalzen zwei- bis vierwertiger anorganischer Sauerstoffsäuren und zweibis vierwertiger Carbonsäuren beträgt im erfindungsgemäßen flüssigen Klebstoffkonzentrat vorzugsweise 5 bis 20 Gew.-%, besonders bevorzugt 6 bis 17 Gew.-%, insbesondere 7 bis 15 Gew.-%, beispielsweise 7 bis 13 Gew.-%, jeweils bezogen auf die Gesamtmasse des Klebstoffkonzentrats und ausgehend vom Gewicht des jeweiligen Salzes ohne Kristallwasser. Innerhalb dieser Bereiche wird ein hervorragend stabilisiertes Konzentrat erhalten, ohne dass die Klebkraft einer daraus hergestellten gebrauchsfertigen Zusammensetzung nachteilig beeinflusst wird.

Das Gewichtsverhältnis der Summe der Alkalimetallsalze zwei- bis vierwertiger anorganischer Sauerstoffsäuren und zwei- bis vierwertiger Carbonsäuren zur Summe aus nichtionischen Polysacchariden und Trockenmasse der Copolymere weist bevorzugt Werte von 1:1 bis 1:4, besonders bevorzugt von 1:2 bis 1:3, auf. Dabei wird von dem Gewicht der Polysaccharide in der eingesetzten Form, d. h. inklusive des Wasseranteils, und vom Gewicht der jeweiligen Salze ohne Kristallwasser ausgegangen.

Generell können im Rahmen der vorliegenden Erfindung bei Einsatz mehrerer Alkalimetallsalze zwei- bis vierwertiger anorganischer Sauerstoffsäuren und gegebenenfalls zwei- bis vierwertiger Carbonsäuren diese sowohl hinsichtlich der Alkalimetallionen als auch der Anionen innerhalb des erfindungsgemäß vorgegebenen Rahmens beliebig variieren.

Vorzugsweise ist das erfindungsgemäße Klebstoffkonzentrat im Wesentlichen frei von organischen Lösungsmitteln. "Im Wesentlichen frei" bedeutet dabei, dass eine als organisches Lösungsmittel geeignete Verbindung zwar grundsätzlich enthalten sein kann, dann allerdings in einer Menge vorliegt, die eine Funktion als Lösungsmittel nicht rechtfertigt. Im Rahmen der vorliegenden Erfindung wird daher unter der Eigenschaft "im Wesentlichen frei von organischen Lösungsmitteln" ein Gesamtanteil von als organisches Lösungsmittel geeigneten Substanzen von maximal 3 Gew.-%, bezogen auf die Gesamtmasse des flüssigen Klebstoffkonzentrats, angesehen. Organische Lösungsmittel im Sinne der vorliegenden Anmeldung sind insbesondere Kohlenwasserstoffe, Alkohole wie z. B. Methanol, Ethanol oder Fettalkohole, Glykole wie z. B. Polyalkylenglykole oder Butandiol, Glykolether und Glykolester, Aldehyde, Ester, Ketone, Verbindungen wie Propylencarbonat und Polyethylenimin und als Lösungsmittel geeigneten Säuren wie z. B. Essigsäure. Ausdrücklich keine organischen Lösungsmittel im Sinne der vorliegenden Erfindung sind die zwingend im erfindungsgemäßen Klebstoffkonzentrat enthaltenen Bestandteile Wasser, nichtionische(s) Polysaccharid(e) und Copolymer(e). Besonders bevorzugt enthält ein erfindungsgemäßes Klebstoffkonzentrat keine organischen Lösungsmittel. Aus der Herstellung der Komponenten des erfindungsgemäßen Klebstoffkonzentrats resultierende beziehungsweise im Bereich der Allgegenwartskonzentration enthaltene Spuren von Lösungsmitteln werden dabei als unbeachtlich angesehen.

Ein erfindungsgemäßes flüssiges Klebstoffkonzentrat kann neben den bereits genannten Inhaltsstoffen noch weitere Zusatzstoffe enthalten. Geeignete weitere Zusatzstoffe sind beispielsweise Stabilisatoren, insbesondere Stabilisatoren, die im wesentlichen salzunempfindlich sind, d. h. deren stabilisierende Wirkung in einer salzhaltigen wässrigen Umgebung nicht soweit abnimmt, dass der stabilisierende Effekt verloren geht.

Durch Stabilisatoren lässt sich eine zusätzliche Stabilisierung des Klebstoffkonzentrats im Hinblick auf Sedimentationserscheinungen erreichen. Geeignete Stabilisatoren sind insbesondere anorganische Stabilisatoren wie Kieselsäure, Schichtsilikate oder Tone. Besonders bevorzugt werden als Stabilisator Schichtsilikate eingesetzt. Stabilisatoren sind im erfindungsgemäßen flüssigen Klebstoffkonzentrat vorzugsweise in einer Menge von bis zu 2 Gew.-%, beispielsweise in einer Menge von 0,1 bis 1,8 Gew.-% enthalten.

Als weitere Zusatzstoffe kann das erfindungsgemäße Klebstoffkonzentrat beispielsweise Biozide, Farbstoffe, Pigmente, Dispergiermittel, Netzmittel und/oder Tenside, Glykole, Verdickungsmittel oder Rheologiehilfsmittel enthalten.

Als Biozide eignen sich beispielsweise quaternäre Ammoniumverbindungen, Aldehyde, vorzugsweise Formaldehyd, Isothiazolone oder Benzisothiazolone oder Gemische aus zwei oder mehr davon. Derartige Biozide können dem Klebstoffkonzentrat zu Konservierungszwecken zugesetzt werden.

Als Farbstoffe und Pigmente sind beispielsweise Kreide, Rutil, Ruß und vergleichbare anorganische Farbstoffe und Pigmente sowie organische Farbstoffe und Pigmente wie Azofarbstoffe oder Anilinfarbstoffe geeignet.

Als Dispergiermittel bzw. Netzmittel und/oder Tenside sind beispielsweise anionische, kationische oder nichtionische Tenside geeignet.

Typische Beispiele für anionische Tenside sind weniger als zwei Säuregruppen aufweisende Alkylbenzolsulfonate, Alkansulfonate, Olefinsulfonate, Alkylethersulfonate, Glycerinethersulfonate, Methylestersulfonate, Sulfofettsäuren, Alkylsulfate, Fettalkoholethersulfate, Glycerinethersulfate, Hydroxymischethersulfate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisothionate, Fettsäuresarcosinate, Fettsäuretauride, Acyllactylate, Alkyloligoglucosidsulfate, Proteinfettsäurekondensate (insbesondere pflanzliche Produkte auf Sojabasis) und Alkyl(ether)phosphate. Sofern die anionischen Tenside Polyglykoletherketten enthalten, können sie eine konventionelle, vorzugsweise jedoch eine eingeengte Homologenverteilung aufweisen.

Weiterhin im Rahmen der vorliegenden Erfindung geeignet sind nichtionische Tenside, die nicht auf Cellulosebasis aufgebaut sind.

Typische Beispiele für derartige nichtionische Tenside sind Fettalkoholpolyglykolether, Alkylphenolpolyglykolether, Fettsäurepolyglykolester, Fettsäureamidpolyglykolether, Fettaminpolyglykolether, alkoxylierte Triglyzeride, Alk(en)yloligoglucoside, Fettsäure-N-alkylglucamide, Proteinhydrolysate (insbesondere pflanzliche Produkte auf Sojabasis) Polyolfettsäureester, Zuckerester, Sorbitanester und Polysorbate. Sofern die nichtionischen Tenside Polyglykoletherketten enthalten, können sie eine konventionelle, vorzugsweise jedoch eine eingeengte Homologenverteilung aufweisen.

Als Glykole sind im Rahmen der vorliegenden Erfindung insbesondere die niedermolekularen Glykole oder Oligoglykolether wie Ethylenglykol, Propylenglykol, Butylenglykol, Diethylenglykol, Dipropylenglykol und dergleichen geeignet.

Als Verdickungsmittel eignen sich im Rahmen der vorliegenden Erfindung besonders die vorstehend bereits als Stabilisatoren aufgeführten Substanzen.

Als Rheologiehilfsmittel eignen sich im Rahmen der vorliegenden Erfindung insbesondere Xanthan-Gum, Schichtsilikate oder Kieselsäure oder Gemische aus zwei oder mehr davon.

Ein erfindungsgemäßes flüssiges Klebstoffkonzentrat enthält die oben genannten Inhaltsstoffe bevorzugt in solchen Mengen, dass eine gut gießfähige Dispersion entsteht. Vorzugsweise weist ein erfindungsgemäßes flüssiges Klebstoffkonzentrat daher eine Viskosität von maximal 15.000 mPas, besonders bevorzugt von 150 bis 8.500 mPas, insbesondere von 1.000 bis 6.500 mPas, beispielsweise von 2.000 bis 5.500 mPas (Brookfield RVT, 20 °C, 20 U/min, Spindel 4 und 5), auf.

Ein erfindungsgemäßes Klebstoffkonzentrat weist darüber hinaus vorzugsweise einen pH-Wert von 4 bis 10, besonders bevorzugt von 5 bis 9 und insbesondere von 6 bis 8 auf. Geeignete pH-Werte liegen beispielsweise in einem Bereich von 6,5 bis 7,5.

Vorzugsweise sind im erfindungsgemäßen flüssigen Klebstoffkonzentrat folgende Inhaltsstoffe zu den angegebenen Anteilen enthalten:

| | | |
|---|---|---|
| 45-70 | Gew.-% | Wasser, |
| 5-30 | Gew.-% | nichtionische(s) Polysaccharid(e), |
| 3-15 | Gew.-% | Copolymer(e), |
| 5-20 | Gew.-% | Alkalimetallsalz(e) einer zwei- bis vierwertigen anorganischen Sauerstoffsäure oder eines Gemisches aus Alkalimetallsalz(en) einer zwei- bis vierwertigen anorganischen Sauerstoffsäure und (einer) zwei- bis vierwertigen Carbonsäure(n), wobei jeweils als ein Alkalimetallsalz einer zwei- bis vierwertigen anorganischen Sauerstoffsäure Natriumsulfat enthalten ist, |
| 0-10 | Gew.-% | weitere Zusatzstoffe, |

wobei sich die Anteile der Inhaltsstoffe zu 100 Gew.-% addieren. Es wird bei diesen Angaben bezüglich des Gewichts der Polysaccharide von der eingesetzten Form, d. h. inklusive des Wasseranteils, bezüglich des Gewichts der Copolymere von der Trockenmasse und bezüglich des Gewichts der Alkalimetallsalze von den jeweiligen Salzen ohne Kristallwasser ausgegangen.

Grundsätzlich können alle im Rahmen des vorliegenden Textes als bevorzugt ausgewiesenen Ausführungsformen, Anteilsbereiche, Bestandteile und sonstigen Merkmale des erfindungsgemäßen Klebstoffkonzentrats in allen möglichen und sich nicht gegenseitig ausschließenden Kombinationen verwirklicht sein.

Ein weiterer Gegenstand der Erfindung ist ein Verfahren zur Herstellung eines erfindungsgemäßen flüssigen Klebstoffkonzentrats, in welchem Natriumsulfat in Wasser gelöst wird, in die so erhaltene Lösung mindestens ein nichtionisches Polysaccharid eingetragen wird und dann eine wässrige Dispersion mindestens eines Copolymers zugegeben wird.

Ferner ist ein Klebstoff offenbart, insbesondere ein Tapetenkleister, Verdickungsmittel oder Farbkonzentrat, der bzw. das unter Verdünnung eines erfindungsgemäßen flüssigen Klebstoffkonzentrats oder eines nach einem erfindungsgemäßen Verfahren hergestellten Klebstoffkonzentrats mit dem mindestens vierfachen Gewicht, bezogen auf das Gesamtgewicht des flüssigen Klebstoffkonzentrats, an Wasser hergestellt wird. Ein weiterer Gegenstand der vorliegenden Erfindung ist die Verwendung eines erfindungsgemäßen flüssigen Klebstoffkonzentrats oder eines nach einem erfindungsgemäßen Verfahren hergestellten flüssigen Klebstoffkonzentrats zur Herstellung von Klebstoffen, insbesondere von Tapetenkleistern, Verdickungsmitteln oder Farbkonzentraten.

### Beispiele

### Allgemeine Herstellvorschrift für die Klebstoffkonzentrate

Es wird Leitungswasser vorgelegt, in das zunächst das einzusetzende Salz eingerührt wird. Anschließend werden das Polysaccharid und die weiteren Zusatzstoffe wie Verdicker, Füllstoff und Konservierungsstoff eingetragen. In die so erhaltene Dispersion wird eine 50 %ige wässrige Dispersion des Copolymers eingerührt. Die konkreten Zusammensetzungen und die damit erzielten Ergebnisse sind den nachstehenden Tabellen 1 und 2 zu entnehmen.

**Tabelle 1 (Angaben in Gew.-%)**

| Bestandteile | 1 Vgl. | 2 Vgl. | 3 Vgl. | 4 Vgl. | 6 erf. | 7 erf. | 8 erf. | 9 erf. | 10 Vgl. |
|---|---|---|---|---|---|---|---|---|---|
| | | | | | | | | | |
| Aluminiumsulfat (Chinafill 800) | 2,5 | 2,5 | 2,5 | 2,5 | 2,5 | 2,5 | 2,5 | 2,5 | 2,5 |
| | | | | | | | | | |
| Natriumsulfat | 4,8 | | | | 9,2 | 12,7 | 4,8 | 6,35 | |
| Natriumcitrat | 7,9 | 12,7 | | | | | 7,9 | 6,35 | |
| Aluminiumsulfat | | | 12,7 | | | | | | |
| Natriumcarbonat | | | | | | | | | 12,7 |
| Natriumtartrat | | | | 12,7 | | | | | |
| | | | | | | | | | |
| Polysaccharid (MHEC 35000 PF) | 18,5 | 18,5 | 18,5 | 18,5 | 18,5 | 18,5 | 18,5 | 18,5 | 18,5 |
| | | | | | | | | | |
| PVAc | 16,0 | | | | | | | | |
| | | | | | | | | | |
| Styrol-Acrylsäureester-Copolymer (Axilat DS 910) (50-%ige wässrige Dispersion) | | 16,0 | 16,0 | 16,0 | 16,0 | 16,0 | 16,0 | 16,0 | 16,0 |
| | | | | | | | | | |
| Konservierungsstoff (Formaldehyd) | 0,35 | 0,35 | 0,35 | 0,35 | 0,35 | 0,35 | 0,35 | 0,35 | 0,35 |
| Verdicker (Schichtsilikate Laponite RD/Laponite Rs, Optigel WX) | 1,0 | 1,0 | 1,0 | 1,0 | 1,0 | 1,0 | 1,0 | 1,0 | 1,0 |
| | | | | | | | | | |
| Wasser | 48,95 | 48,95 | 48,95 | 48,95 | 52,45 | 48,95 | 48,95 | 48,95 | 48,95 |
| | | | | | | | | | |
| Gesamt | 100 | 100 | 100 | 100 | 100 | 100 | 100 | 100 | 100 |

| | | | | | | | | | |
|---|---|---|---|---|---|---|---|---|---|
| Vgl. = Vergleichsbeispiel erf. = erfindungsgemäßes Beispiel | | | | | | | | | |

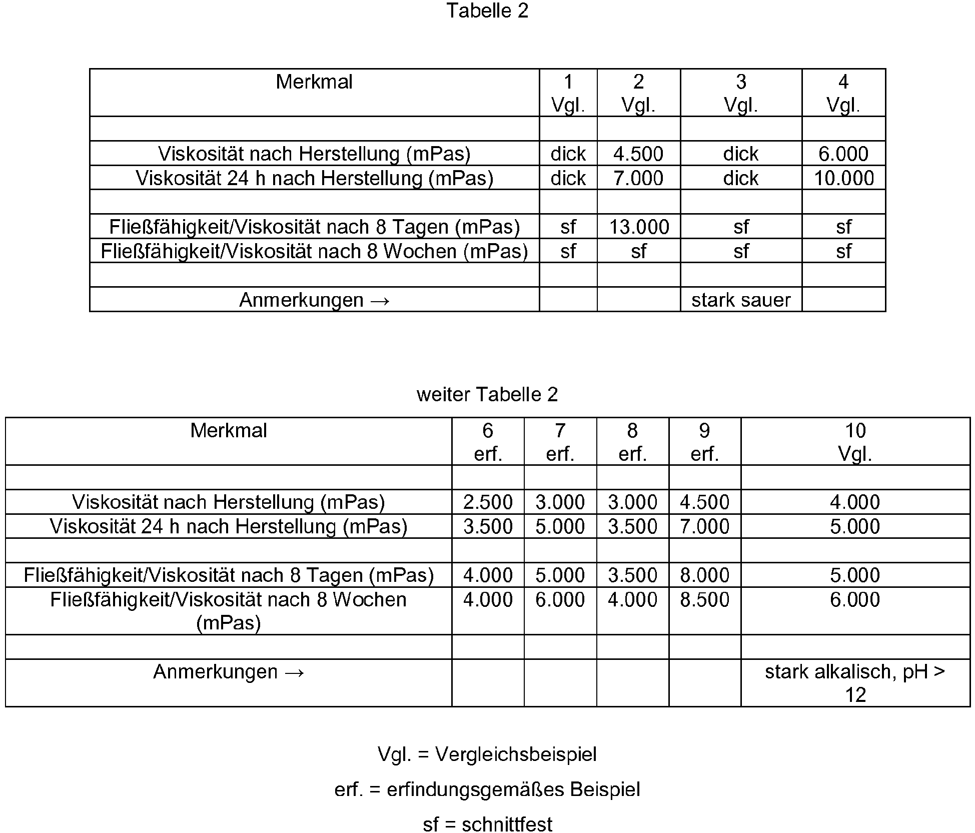

Diese Ergebnisse verdeutlichen, dass ein erfindungsgemäßes Klebstoffkonzentrat auch nach mehrwöchiger Lagerung nicht eindickt und damit als Dispersion stabil, gut gießfähig und verarbeitbar bleibt.

## Patentansprüche

1. Flüssiges Klebstoffkonzentrat, wobei das Klebstoffkonzentrat ein Konzentrat eines Klebstoffs, Tapetenkleisters, einer Farbzubereitung oder ein Farbkonzentrat ist, enthaltend Wasser, mindestens ein nichtionisches Polysaccharid, mindestens ein Copolymer und Natriumsulfat, **dadurch gekennzeichnet, dass** der Anteil an nichtionischem Polysaccharid 2 bis 70 Gew.-%, bezogen auf die Gesamtmasse des Klebstoffkonzentrats und ausgehend von den nichtionischen Polysacchariden in der eingesetzten Form, das heißt inklusive des Wassergehaltes von 5 bis 20 Gew.-%, beträgt.

2. Flüssiges Klebstoffkonzentrat gemäß Anspruch 1, **dadurch gekennzeichnet, dass** zusätzlich mindestens ein Alkalimetallsalz einer zwei- bis vierwertigen Carbonsäure enthalten ist.

3. Flüssiges Klebstoffkonzentrat gemäß Anspruch 2, **dadurch gekennzeichnet, dass** die enthaltenen Alkalimetallionen Natriumionen sind.

4. Flüssiges Klebstoffkonzentrat gemäß mindestens einem der vorstehenden Ansprüche, **dadurch gekennzeichnet, dass** der Gesamtgehalt an Alkalimetallsalzen zwei- bis vierwertiger anorganischer Sauerstoffsäuren und zwei- bis vierwertiger Carbonsäuren 5 bis 20 Gew.-%, bezogen auf die Gesamtmasse des Klebstoffkonzentrats, beträgt.

5. Flüssiges Klebstoffkonzentrat gemäß mindestens einem der vorstehenden Ansprüche, **dadurch gekennzeichnet, dass** das Gewichtsverhältnis der Summe aus Alkalimetallsalzen zwei- bis vierwertiger anorganischer Sauerstoffsäuren und zwei- bis vierwertiger Carbonsäuren zur Summe aus nichtionischen Polysacchariden und Trockenmasse der Copolymere Werte von 1:1 bis 1:4 aufweist.

6. Flüssiges Klebstoffkonzentrat gemäß mindestens einem der vorstehenden Ansprüche, **dadurch gekennzeichnet, dass** das Gewichtsverhältnis der nichtionischen Polysaccharide zur Trockenmasse der Copolymere Werte von 1:1 bis 4:1 aufweist.

7. Flüssiges Klebstoffkonzentrat gemäß mindestens einem der vorstehenden Ansprüche, **dadurch gekennzeichnet, dass** das mindestens eine Copolymer ein Methacrylsäureester-, Acrylsäureester- und/oder Styrolcopolymer ist.

8. Flüssiges Klebstoffkonzentrat gemäß mindestens einem der vorstehenden Ansprüche, **dadurch gekennzeichnet, dass** als nichtionisches Polysaccharid mindestens eine Hydroxyalkylcellulose und/oder mindestens ein Derivat davon enthalten ist.

9. Flüssiges Klebstoffkonzentrat gemäß mindestens einem der vorstehenden Ansprüche, **dadurch gekennzeichnet, dass** das Klebstoffkonzentrat im Wesentlichen frei von organischen Lösungsmitteln ist.

10. Flüssiges Klebstoffkonzentrat gemäß mindestens einem der vorstehenden Ansprüche, **dadurch gekennzeichnet, dass** folgende Inhaltsstoffe in den angegebenen Anteilen enthalten sind:
| | |
|---|---|
| 45-70 | Gew.-% Wasser, |
| 5-30 | Gew.-% nichtionische(s) Polysaccharid(e), |
| 3-15 | Gew.-% Copolymer(e), |
| 5-20 | Gew.-% Alkalimetallsalz(e) einer zwei- bis vierwertigen anorganischen Sauerstoffsäure oder eines Gemisches aus Alkalimetallsalz(en) einer zwei- bis vierwertigen anorganischen Sauerstoffsäure und (einer) zwei- bis vierwertigen Carbonsäure(n), wobei jeweils als ein Alkalimetallsalz einer zwei- bis vierwertigen anorganischen Sauerstoffsäure Natriumsulfat enthalten ist, |
| 0-10 | Gew.-% weitere Zusatzstoffe, |
wobei sich die Anteile der Inhaltsstoffe zu 100 Gew.-% addieren.

11. Verfahren zur Herstellung eines flüssigen Klebstoffkonzentrats gemäß mindestens einem der vorstehenden Ansprüche, in welchem Natriumsulfat in Wasser gelöst wird, in die so erhaltene Lösung mindestens ein nichtionisches Polysaccharid eingetragen wird und dann eine wässrige Dispersion mindestens eines Copolymers zugegeben wird.

12. Verwendung eines flüssigen Klebstoffkonzentrats gemäß mindestens einem der Ansprüche 1 bis 10 oder hergestellt nach einem Verfahren gemäß Anspruch 11 zur Herstellung von Klebstoffen.

## Claims

1. A liquid adhesive concentrate, the adhesive concentrate being a concentrate of an adhesive, a wallpaper paste, a color formulation or a color concentrate, containing water, at least one non-ionic polysaccharide, at least one copolymer and sodium sulfate, **characterized in that** the proportion of non-ionic polysaccharide is from 2 to 70 wt.%, based on the total mass of the adhesive concentrate and starting from the non-ionic polysaccharides in the form used, i.e. including the water content of from 5 to 20 wt.%.

2. The liquid adhesive concentrate according to claim 1, **characterized in that** at least one alkali metal salt of a di- to tetravalent carboxylic acid is additionally contained.

3. The liquid adhesive concentrate according to claim 2, **characterized in that** the alkali metal ions contained are sodium ions.

4. The liquid adhesive concentrate according to at least one of the preceding claims, **characterized in that** the total content of alkali metal salts of di- to tetravalent inorganic oxyacids and di- to tetravalent carboxylic acids is from 5 to 20 wt.%, based on the total mass of the adhesive concentrate.

5. The liquid adhesive concentrate according to at least one of the preceding claims, **characterized in that** the weight ratio of the sum of alkali metal salts of di- to tetravalent inorganic oxyacids and di- to tetravalent carboxylic acids to the sum of non-ionic polysaccharides and dry mass of the copolymers has values of from 1:1 to 1:4.

6. The liquid adhesive concentrate according to at least one of the preceding claims, **characterized in that** the weight ratio of the non-ionic polysaccharides to the dry mass of the copolymers has values of from 1:1 to 4:1.

7. The liquid adhesive concentrate according to at least one of the preceding claims, **characterized in that** the at least one copolymer is a methacrylic acid ester copolymer, acrylic acid ester copolymer and/or styrene copolymer.

8. The liquid adhesive concentrate according to at least one of the preceding claims, **characterized in that** at least one hydroxyalkyl cellulose and/or at least one derivative thereof is contained as the non-ionic polysaccharide.

9. The liquid adhesive concentrate according to at least one of the preceding claims, **characterized in that** the adhesive concentrate is substantially free of organic solvents.

10. The liquid adhesive concentrate according to at least one of the preceding claims, **characterized in that** the following ingredients are contained in the proportions indicated:
| | |
|---|---|
| 45-70 | wt.% water; |
| 5-30 | wt.% non-ionic polysaccharide(s); |
| 3-15 | wt.% copolymer(s); |
| 5-20 | wt.% alkali metal salt(s) of a di- to tetravalent inorganic oxyacid or a mixture of alkali metal salt(s) of a di- to tetravalent inorganic oxyacid and (a) di- to tetravalent carboxylic acid(s), in each case sodium sulfate being contained as an alkali metal salt of a di- to tetravalent inorganic oxyacid; |
| 0-10 | wt.% further additives, |
the proportions of the ingredients adding up to 100 wt.%.

11. A method for preparing a liquid adhesive concentrate according to at least one of the preceding claims, in which sodium sulfate is dissolved in water, at least one non-ionic polysaccharide is introduced into the resulting solution and then an aqueous dispersion of at least one copolymer is added.

12. The use of a liquid adhesive concentrate according to at least one of claims 1 to 10 or prepared using a method according to claim 11 for preparing adhesives.

## Revendications

1. Concentré d'adhésif liquide, dans lequel le concentré d'adhésif est un concentré d'adhésif, de colle à papier peint, de préparation de couleur ou un concentré de couleur contenant de l'eau, au moins un polysaccharide non ionique, au moins un copolymère et du sulfate de sodium, **caractérisé en ce que** le polysaccharide non ionique est présent en une proportion allant de 2 à 70 % en poids par rapport au poids total du concentré d'adhésif et sur la base des polysaccharides non ioniques sous la forme utilisée, c'est-à-dire incluant la teneur en eau de 5 à 20 % en poids.

2. Concentré d'adhésif liquide selon la revendication 1, **caractérisé en ce que** le concentré d'adhésif liquide contient en outre au moins un sel de métal alcalin d'acide carboxylique di- à tétravalent.

3. Concentré d'adhésif liquide selon la revendication 2, **caractérisé en ce que** les ions de métal alcalin présents sont des ions sodium.

4. Concentré d'adhésif liquide selon au moins l'une quelconque des revendications précédentes, **caractérisé en ce que** la teneur totale en sels de métal alcalin d'acides oxygénés inorganiques di- à tétravalents et d'acides carboxyliques di- à tétravalents se situe dans la plage allant de 5 à 20 % en poids, par rapport au poids total du concentré d'adhésif.

5. Concentré d'adhésif liquide selon au moins l'une quelconque des revendications précédentes, **caractérisé en ce que** le rapport en poids de la somme des sels de métal alcalin d'acides oxygénés inorganiques di- à tétravalents et d'acides carboxyliques di- à tétravalents à la somme des polysaccharides non ioniques et de la matière sèche des copolymères présente des valeurs allant de 1:1 à 1:4.

6. Concentré d'adhésif liquide selon au moins l'une quelconque des revendications précédentes, **caractérisé en ce que** le rapport en poids des polysaccharides non ioniques à la masse sèche des copolymères présente des valeurs allant de 1:1 à 4:1.

7. Concentré d'adhésif liquide selon au moins l'une quelconque des revendications précédentes, **caractérisé en ce que** l'au moins un copolymère est un copolymère d'ester d'acide méthacrylique, un copolymère d'ester d'acide acrylique et/ou un copolymère de styrène.

8. Concentré d'adhésif liquide selon au moins l'une quelconque des revendications précédentes, **caractérisé en ce que** le concentré d'adhésif liquide contient en tant que polysaccharide non ionique au moins une hydroxyalkylcellulose et/ou au moins un dérivé de celle-ci.

9. Concentré d'adhésif liquide selon au moins l'une quelconque des revendications précédentes, **caractérisé en ce que** le concentré d'adhésif est sensiblement exempt de solvants organiques.

10. Concentré d'adhésif liquide selon au moins l'une quelconque des revendications précédentes, **caractérisé en ce que** les ingrédients suivants sont présents dans les proportions indiquées :
| | |
|---|---|
| de 45 à 70 % | en poids d'eau, |
| de 5 à 30 % | en poids de polysaccharide(s) non ionique(s), |
| de 3 à 15 % | en poids de copolymère(s), |
| de 5 à 20 % | en poids de sel(s) de métal alcalin d'un acide oxygéné inorganique di- à tétravalent ou d'un mélange de sel(s) de métal alcalin d'un acide oxygéné inorganique di- à tétravalent et d'acide(s) carboxylique(s) di- à tétravalent(s), le concentré d'adhésif liquide contenant dans chaque cas du sulfate de sodium en tant que sel de métal alcalin d'un acide oxygéné inorganique di- à tétravalent, |
| de 0 à 10 % | en poids d'autres additifs, |
dans lequel les proportions des ingrédients représentent au total 100 % en poids.

11. Procédé de préparation d'un concentré d'adhésif liquide selon au moins l'une des revendications précédentes, dans lequel le sulfate de sodium est dissous dans de l'eau, au moins un polysaccharide non ionique est introduit dans la solution ainsi obtenue, puis une dispersion aqueuse d'au moins un copolymère est ajoutée.

12. Utilisation d'un concentré d'adhésif liquide selon au moins l'une quelconque des revendications 1 à 10 ou préparé par un procédé selon la revendication 11 pour la préparation d'adhésifs.
